# EUROPÄISCHE PATENTANMELDUNG

(11) **EP 1 884 906 A1**
(43) Veröffentlichungstag der Anmeldung: **06.02.2008**
(21) Anmeldenummer: 06118219.2
(22) Anmeldetag: 31.07.2006
(51) Int. Cl.: G08B 25/10

(54) **Levelsynchronisation bei Funk-Kommunikationsnetzwerken**

(71) Anmelder: Siemens Building Technologies Fire & Security Products GmbH & Co. oHG, 81679 München (DE)
(72) Erfinder: Nahrstedt, Dierk, 81929 München (DE); Schreyer, Karlheinz, 82515 Wolfrathshausen (DE)
(74) Vertreter: Maier, Daniel Oliver

(57) **Zusammenfassung**

Die Erfindung beschreibt ein Verfahren zur Funkübertragung in einem Kommunikationsnetzwerk mit einer Zentrale (601) und mehreren Teilnehmern (611, 621, 631, 641), die in Bezug auf die Zentrale (601) unterschiedlichen Kommunikationsebenen zugeordnet sind. Die Zentrale (601) und die Teilnehmer (611, 621, 631, 641) weisen jeweils einen Sender und einen Empfänger auf. Das beschriebene Verfahren umfasst folgende Schritte: (a) Einschalten der Empfänger zu zyklisch vorgegebenen Einschaltzeitpunkten für jeweils einen bestimmten Empfangszeitraum (660), und (b) Senden eines Ankündigungstelegramms (670) durch einen sendenden Teilnehmer (641, 631) an einen empfangenden Teilnehmer (631, 621) während einer Zeitspanne, die mit dem Empfangszeitraum (660) des empfangenden Teilnehmers (631, 621) überlappt. Dabei sind die Einschaltzeitpunkte von Teilnehmern, die unterschiedlichen Kommunikationsebenen zugeordneten sind, miteinander synchronisiert und das Ankündigungstelegramm (670) weist zumindest zwei Ankündigungssignale (671) auf. Ferner hängt die Anzahl der Ankündigungssignale (671) von der Ungenauigkeit der Zeitbasen des sendenden Teilnehmers (641, 631) und des empfangenden Teilnehmers (631, 621) sowie von der Zeitdifferenz zwischen der letzten Synchronisation zwischen dem sendenden Teilnehmer (641, 631) und dem empfangenden Teilnehmer (631, 621) ab.

## Beschreibung

Die vorliegende Erfindung betrifft das Gebiet der drahtlosen Kommunikation. Die vorliegende Erfindung betrifft insbesondere ein Verfahren zur Funkübertragung in einem Kommunikationsnetzwerk mit einer Zentrale und mehreren Teilnehmern, die in Bezug auf die Zentrale unterschiedlichen Kommunikationsebenen zugeordnet sind, wobei die Zentrale und die Teilnehmer jeweils einen Sender und einen Empfänger aufweisen.

Die vorliegende Erfindung betrifft ferner ein Kommunikationsgerät sowie ein Funk-Kommunikationsnetzwerk, welche zur Durchführung des erfindungsgemäßen Verfahrens zur Funkübertragung eingerichtet sind.

Außerdem betrifft die Erfindung ein computerlesbares Speichermedium sowie ein Programm-Element, welche Instruktionen zur Durchführung des erfindungsgemäßen Verfahrens zur Funkübertragung enthalten.

Funk ist für viele Kommunikationsnetze ein nahezu ideales Übertragungsmedium. Geräte mit Funktechnik sind schnell zu installieren und leicht an geänderte Anforderungen anzupassen. Dies gilt insbesondere für die moderne Gebäudetechnik, bei der ein Gebäude durch ein Gefahrenmeldesystem vor Bränden und/oder Einbrüchen geschützt werden kann. Nachteilig bei Funk-Kommunikationsnetzen wirkt sich jedoch die relativ kurze Reichweite in Gebäuden bei Trägerfrequenzen im Gigahertzbereich aus. Werden zur Erhöhung der Reichweite sog. Repeater eingesetzt, erfordert der hohe Energieverbrauch in der Regel netzversorgte Geräte. Dies gilt besonders für Funkanlagen im neuen Short Range Device Funkband zwischen 868 und 870 MHz.

In Anlagen mit Repeatern bzw. Routern zur Reichweitenerhöhung muss die eine entsprechende Information über mehrere Stationen hinweg in kurzer Zeit zu ihrem Ziel gelangen. Diese kurze Zeit bemisst sich in der Gebäudesicherheit (Brandmeldung, Intrusionsschutz) mit einigen wenigen Sekunden und in der Gebäudeautomatisierung (Lichtanlagen) mit weniger als einer Sekunde.

Aus der EP 1282095 A2 ist ein Verfahren zur Funkübertragung in einem Gefahrmeldesystem bekannt, welches über Repeater arbeitet und eine freie Wahl der für den Empfang vorgesehenen Teilnehmer erlaubt. Dabei wird für jeden Teilnehmer eine Liste hinterlegt, in der für direkt erreichbare für den Empfang vorgesehene Teilnehmer deren Adresse abgespeichert wird. Für nicht direkt, sondern lediglich mittelbar erreichbare Teilnehmer wird die Adresse des nächsten vermittelnden Teilnehmers in dem entsprechenden Funk-Kommunikationsnetzwerk abgespeichert. Damit lassen sich Informationen in einem Gefahrmeldesystem individuell zwischen verschiedenen Teilnehmern austauschen.

Aus der EP 1282094 A2 ist ein Verfahren zur Funkübertragung in einem Gefahrmeldesystem bekannt, welches über Repeater arbeitet und dennoch Strom sparend ausgelegt ist, so dass ein Batteriebetrieb auch über eine längere Betriebsdauer möglich ist. Dabei werden die Empfangseinrichtungen zyklisch zu vorgegebenen Zeitpunkten eingeschaltet und sendewillige Teilnehmer senden ein Ankündigungstelegramm, das dazu führt, dass die für den Empfang vorgesehenen Teilnehmer im Falle des Empfangs bis zum Ende des gesamten Ankündigungstelegramms eingeschaltet bleiben und im Falle, dass kein Ankündigungstelegramm empfangen wird, wieder ausgeschaltet werden. In dem Ankündigungstelegramm wird ein Zeitpunkt übermittelt, zu dem sich der Empfänger wieder einschaltet, um das eigentliche Daten- bzw. Nutztelegramm zu empfangen. Durch das zyklische Abschalten der Empfänger kann der Stromverbrauch der einzelnen Teilnehmer deutlich reduziert werden.

Aus der Veröffentlichung "An Adaptive Energy-Efficient and Low-Latency MAC for Data Gathering in Wireless Sensor Networks, Gang Lu et al., Proceedings of the 18th International Parallel and Distributed Processing Symposium, 0-7695-2132-0/04/$17.00 (C) 2004 IEEE" ist ein Verfahren zum Betreiben eines in Form eines baumartig verzweigten Funk-Kommunikationsnetzwerkes bekannt, bei dem ein zügiger Datenaustausch zwischen unterschiedlichen Kommunikationsebenen zugeordneten Teilnehmern des Funk-Kommunikationsnetzwerkes ermöglicht wird. Dabei wird ein so genanntes Medium Access Control (MAC) Protokoll dahingehend modifiziert, dass das zeitliche Raster, in dem die einzelnen Teilnehmer zyklisch abgeschaltet werden, jeweils einen zeitlichen Versatz aufweist. Dieser Versatz hängt dabei von der Stellung des betreffenden Teilnehmers in dem baumartig verzweigten Funk-Kommunikationsnetzwerk bzw. von der entsprechenden Kommunikationsebene des Teilnehmers ab.

Trotz der durch oben genannte Verfahren bereits erreichten Reduzierung des Stromverbrauches besteht weiterhin das Bedürfnis, den Stromverbrauch eines Funk-Kommunikationsnetzwerkes weiter zu senken.

Der Erfindung liegt somit die Aufgabe zugrunde, ein Verfahren zum Betreiben von Funk-Kommunikationsnetzwerken anzugeben, welches eine weitere Energieeinsparung und damit einen verlängerten Betrieb von batteriebetriebenen Funk-Teilnehmern ermöglicht.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Mit dem unabhängigen Patentanspruch 1 wird ein Verfahren zur Funkübertragung in einem Kommunikationsnetzwerk mit einer Zentrale und mehreren Teilnehmern beschrieben, die in Bezug auf die Zentrale unterschiedlichen Kommunikationsebenen zugeordnet sind. Die Zentrale und die Teilnehmer weisen jeweils einen Sender und einen Empfänger auf. Das erfindungsgemäße Verfahren umfasst folgende Schritte: (a) Einschalten der Empfänger zu zyklisch vorgegebenen Einschaltzeitpunkten für jeweils einen bestimmten Empfangszeitraum und (b) Senden eines Ankündigungstelegramms durch einen sendenden Teilnehmer an einen empfangenden Teilnehmer während einer Zeitspanne, die mit dem Empfangszeitraum des empfangenden Teilnehmers überlappt. Dabei sind die Einschaltzeitpunkte von Teilnehmern, die unterschiedlichen Kommunikationsebenen zugeordneten sind, miteinander synchronisiert. Ferner weist das Ankündigungstelegramm zumindest zwei Ankündigungssignale auf und die Anzahl der Ankündigungssignale hängt von der Ungenauigkeit der Zeitbasen des sendenden Teilnehmers und des empfangenden Teilnehmers sowie von der Zeitdifferenz zwischen der letzten Synchronisation zwischen dem sendenden Teilnehmer und dem empfangenden Teilnehmer ab.

Der Erfindung liegt die Erkenntnis zugrunde, dass bei einer Synchronisation der verschieden Kommunikationsebenen untereinander die Empfangsbereitschaften der Teilnehmer der anderen Kommunikationsebenen genau bekannt sind und somit nicht nur der Sendezeitraum eines so genannten Nutztelegramms sondern auch das zeitliche Raster der Sendezeiträume der Ankündigungstelegramme entsprechend ausgewählt werden kann. Auf diese Weise verringert sich der Stromverbrauch aller sendenden Teilnehmer. Die Reduzierung des Stromverbrauchs ist insbesondere für diejenigen Teilnehmer besonders hoch, die in dem Kommunikationssystem die Funktion eines Routers übernehmen, welcher für eine gezielte Weiterleitung eines Nutztelegramms an einen Teilnehmer einer benachbarten Kommunikationsebene vorgesehen ist.

Unter dem Begriff Kommunikationsebene ist im Folgenden ein Zusammenschluss von denjenigen Teilnehmern zu verstehen, die mit der Zentrale über eine bestimmte Anzahl an weiteren Teilnehmern kommunizieren. Demzufolge umfasst die erste Kommunikationsebene bzw. die Kommunikationsebene erster Ordnung diejenigen Teilnehmer, die direkt mit der Zentrale kommunizieren können. Die zweite Kommunikationsebene umfasst die Teilnehmer, die mit der Zentrale mittelbar über einen Teilnehmer der ersten Kommunikationsebene kommunizieren. Die dritte Kommunikationsebene umfasst die Teilnehmer, die mit der Zentrale mittelbar über einen bestimmten Teilnehmer der zweiten Kommunikationsebene kommunizieren, welcher wiederum mittelbar über einen bestimmten Teilnehmer der ersten Kommunikationsebene mit der Zentrale kommuniziert. Mit anderen Worten, jeder Teilnehmer einer Kommunikationsebene höherer Ordnung kommuniziert mittelbar mit der Zentrale über jeweils einen Teilnehmer der Kommunikationsebenen niedrigerer Ordnung.

Die Zuordnung eines Teilnehmers zu einer bestimmten Kommunikationsebene hängt dabei insbesondere von dem Ort ab, an dem sich der betreffende Teilnehmer befindet. Dabei ist nicht der räumliche Abstand zu den anderen Teilnehmern bzw. zu der Zentrale maßgeblich, sondern die Funk-Empfangseigenschaften, d.h. die Empfangspegel der von unterschiedlichen Teilnehmern gesendeten Funksignale bestimmen die Zuordnung eines Teilnehmers zu einer bestimmten Kommunikationsebene.

Nach dem räumlichen Aufstellen der einzelnen Teilnehmer kann für das gesamte Funknetzwerk in bekannter Weise ein automatisches Routing-Verfahren durchgeführt werden, bei dem sich sämtliche Teilnehmer automatisch einer bestimmten Kommunikationsebene zuordnen und bei dem für jeden Teilnehmer der zweiten und höheren Kommunikationsebene festgelegt wird, über welche Teilnehmer von anderen Kommunikationsebenen er mittelbar mit der Zentrale kommuniziert.

Mit der Anzahl der Ankündigungssignale erhöht sich automatisch die gesamte Länge des Ankündigungstelegramms. Somit hängt die Länge des Ankündigungstelegramms von dem Zeitunterschied ab, der sich seit der letzten Synchronisation, bei der die Zeitbasen des sendenden Teilnehmers und des empfangenden Teilnehmers abgeglichen wurden, infolge einer bestimmten Unschärfe der beiden Zeitbasen zwischen dem sendenden und dem empfangenden Teilnehmer eingestellt hat. Anders ausgedrückt bedeutet dies, dass infolge der Toleranz der Zeitbasen der beiden Funkteilnehmer seit der letzten Synchronisation die Uhren der beiden Funkteilnehmer eine gewisse Zeitdifferenz aufweisen können. Die Anzahl der Ankündigungssignale des sendenden Teilnehmers muss demzufolge so groß sein, dass selbst bei einer maximal möglichen Zeitdifferenz zumindest eines der Ankündigungssignale von dem empfangsbereiten empfangenden Teilnehmer aufgenommen wird.

Gemäß Anspruch 2 weist das Verfahren zusätzlich folgende Schritte auf: (a) Senden eines Nutztelegramms durch den sendenden Teilnehmer an den empfangenden Teilnehmer zu einem Zeitpunkt, der dem empfangenden Teilnehmer mittels des Ankündigungstelegramms mitgeteilt wurde, und (b) Empfangen eines Nutztelegramms durch den empfangenden Teilnehmer.

Durch eine gezielte Information des geplanten Sendezeitpunkts, welche in dem Ankündigungstelegramm enthalten ist, kann der sendende Teilnehmer somit bereits zum frühesten möglichen Zeitpunkt seine möglichen Empfangsteilnehmer über die geplante Sendezeit informieren. Dies schafft die Möglichkeit, dass sich der empfangende Teilnehmer nach dem Empfang eines gültigen Ankündigungssignals vorübergehend abschalten kann und erst kurz vor dem Sendezeitpunkt wieder angeschaltet wird. Auf diese Weise kann der Stromverbrauch des empfangenden Teilnehmers deutlich gesenkt werden.

Das beschriebene Verfahren hat zudem den Vorteil, dass die effektive Belegung des betreffenden Funkkanals drastisch sinkt. Damit reduziert sich sowohl der so genannte Duty Cycle als auch die Kollisionswahrscheinlichkeit von miteinander konkurrierenden Ankündigungstelegrammen verschiedener Funkteilnehmer. Das bekannte Gefahrenmeldesystem SiRoute der Fa. Siemens könnte im Falle der Anwendung des beschriebenen Verfahrens sogar im 0,1% Duty Cycle Bereich des Short Range Device Funkbandes bei 869 MHz arbeiten.

Ein weiterer Vorteil des beschriebenen Verfahrens besteht darin, dass für sämtliche Teilnehmer die Anforderungen an die Ressourcen des jeweiligen Mikroprozessors im Vergleich zu bekannten Verfahren zur funkbasierten Datenübertragung innerhalb eines Kommunikationsnetzwerkes deutlich reduziert sind.

Gemäß Anspruch 3 weist das Ankündigungstelegramm aufeinander folgende Ankündigungssignale auf. Dabei kann zwischen den Ankündigungssignalen für eine gewisse Zeit ein unmoduliertes Trägersignal gesendet werden.
Um einen zuverlässigen Empfang zumindest eines Ankündigungssignals zu gewährleisten, kann der sendende Teilnehmer das erste Ankündigungssignal bereits zu einem Zeitpunkt aussenden, der vor dem Beginn des Empfangszeitraums des empfangenden Teilnehmers liegt. Bevorzugt entspricht die Zeitspanne zwischen diesem Zeitpunkt und dem Beginn des Empfangszeitraums zumindest der zeitlichen Länge eines Ankündigungssignals. Auf diese Weise wird sichergestellt, dass das Senden der einzelnen Ankündigungssignale nicht in einem ungünstigen Zeitraster erfolgt, so dass unter Umständen von mehreren Ankündigungssignalen keines von dem empfangenden Teilnehmer in korrekter Weise empfangen und entsprechend ausgewertet werden kann. Bei einem Aussenden des ersten Ankündigungssignals kurz vor Beginn des Empfangszeitraums wird sichergestellt, dass bereits das zweite Ankündigungssignal zuverlässig erkannt werden kann.

Gemäß Anspruch 4 weisen die Ankündigungssignale jeweils eine Präambel und ein Informationssignal auf. Bevorzugt bleibt dabei zwischen den Sendeblöcken bestehend aus jeweils einer Präambel und einem Ankündigungssignal der jeweilige Sender angeschalten.

In diesem Zusammenhang ist unter dem Begriff Präambel ein eindeutiges Muster einer zeitlichen Signalfolge zu verstehen, welches Muster sich für einen Phasenabgleich der internen Zeitbasis zur Biterkennung des empfangenden Teilnehmers auf den sendenden Teilnehmer eignet. Im Falle einer digitalen Datenübertragung zwischen den einzelnen Teilnehmern des Kommunikationsnetzwerkes ist die Präambel typischerweise eine bestimmte Bitfolge, die ein solches eindeutiges Muster enthält, mit dem die beiden Funkteilnehmer, d.h. der sendende Teilnehmer und der empfangende Teilnehmer miteinander auf Bitebene synchronisiert werden können.

Mit dem Informationssignal können beispielsweise Informationen über den genauen Zeitpunkt eines nachfolgend geplanten Nutztelegramms erfolgen. Außerdem kann das Informationssignal eine Information enthalten, mit welcher der weitere Weg eines zu übertragenden Nutztelegramms hin zu einem finalen Empfänger beschrieben wird. Der finale Empfänger kann dabei die Zentrale sein oder ein anderer Teilnehmer des Kommunikationsnetzwerkes. Der weitere Weg ist in diesem Zusammenhang durch die an der Funkübertragung beteiligten Teilnehmer bestimmt.

Gemäß Anspruch 5 sind die Teilnehmer innerhalb einer Kommunikationsebene derart miteinander synchronisiert, dass die entsprechenden Einschaltzeitpunkte der betreffenden Teilnehmer zeitlich versetzt sind. Auf diese Weise ist ein Teilnehmer einer beliebigen Kommunikationsebene in der Lage, diejenigen Zeitspannen vorherzusagen, in der die Empfänger einer anderen Kommunikationsebene eingeschaltet sind.

Selbstverständlich ist es dafür erforderlich, dass der betreffende Teilnehmer den zeitlichen Versatz zwischen den einzelnen Teilnehmern der anderen Kommunikationsebenen kennt.

Damit kann sich der Teilnehmer bei einem Sendewunsch nach oben, d.h. zu einem Teilnehmer einer höheren Kommunikationsebene bzw. von der Zentrale weg, oder bei einem Sendewunsch nach unten, d.h. zu einer niedrigeren Kommunikationsebene bzw. zur Zentrale hin, auf die Empfangs-Zeitfenster des jeweiligen Funkpartners einstellen. Der zeitliche Versatz bzw. die Einschaltzeitpunkte der einzelnen Empfänger kann bzw. können mit der Adresse des betreffenden Teilnehmers innerhalb des Kommunikationsnetzwerkes verknüpft sein.

Gemäß Anspruch 6 sind die Teilnehmer innerhalb einer Kommunikationsebene derart miteinander synchronisiert, dass die entsprechenden Einschaltzeitpunkte der betreffenden Teilnehmer zeitlich zumindest annähernd zusammenfallen. Bei einem derartigen gleichzeitigen Einschalten der Empfänger innerhalb einer Kommunikationsebene kann ein Teilnehmer auf besonders einfache Weise die Empfangszeiten der Teilnehmer anderer Kommunikationsebenen vorhersagen.

Wenn die Teilnehmer innerhalb einer Kommunikationsebene zumindest nahezu gleichzeitig ihre Empfänger einschalten hat dies zudem den Vorteil, dass bei einer Veränderung von Empfangseigenschaften von zumindest einem der Teilnehmer des Kommunikationsnetzwerkes ein automatisches Umrouten besonders zügig und zuverlässig durchgeführt werden kann. Bei einem derartigen Umrouten können in bekannter Weise die einzelnen Teilnehmer ggf. anderen Kommunikationsebenen zugeordnet werden.

Gemäß Anspruch 7 sind die Einschaltzeitpunkte von Teilnehmern unterschiedlicher Kommunikationsebenen sukzessive verschoben. Eine derartige Staffelung der Empfangszeiten der Teilnehmer von unterschiedlichen Kommunikationsebenen hat den Vorteil, dass die für eine mehrstufige Übertragung eines Nutztelegramms erforderliche Zeit von einem sendenden Teilnehmer bis hin zu einem finalen empfangenden Teilnehmer minimiert werden kann.

Sofern es sich bei dem Kommunikationsnetzwerk um ein Gefahrenmeldesystem handelt, werden die Teilnehmer von äußeren Kommunikationsebenen ihre Empfänger bevorzugt zeitlich vor den Teilnehmern von inneren Kommunikationsebenen einschalten. Dadurch wird sichergestellt, dass bei einer Gefahrmeldung die für die Sicherheit stärker relevante Datenübertragungsrichtung hin zur Zentrale einen besonders zügigen Datentransfer gewährleistet.

Im Vergleich zu Reaktionszeiten von bekannten Gefahrenmeldesystemen wie beispielsweise das System SiRoute der Fa. Siemens ist die Reaktionszeit eines Gefahrenmeldesystems, welches das beschriebene Verfahren zur Funkübertragung verwendet, deutlich geringer. Somit sind auch Bedienfeldeingaben eines im wesentlichen asynchronen Netzwerkes in Kommunikationsebenen möglich, die weiter als zwei Kommunikationsebenen bzw. Hops von der Zentrale entfernt sind, ohne dass eine für den Benutzer unzumutbare Wartezeit überschritten wird, innerhalb der Bedienfeldeingaben von der Zentrale beantwortet werden. Die beschriebene Staffelung der Empfangszeiten hat zudem den Vorteil, dass im Vergleich zu bekannten Kommunikationsnetzwerken die Reaktionszeiten von Ausgängen wie beispielsweise Signalgeber oder Steuerungen ebenfalls erheblich kürzer sind.

Es wird darauf hingewiesen, dass die für einen Datentransfer hin zu der Zentrale benötigte Zeitspanne sowohl von der Anzahl der beteiligten Kommunikationsebenen als auch von dem zwischen zwei benachbarten Kommunikationsebenen eingestellten Zeitversatz bzgl. der Einschaltzeitpunkte abhängt. Eine besonders schnelle Datenübertragung wird prinzipiell durch einen möglichst kurzen Zeitversatz zwischen zwei benachbarten Kommunikationsebenen realisiert. Allerdings muss der Zeitversatz noch groß genug sein, dass ein Ankündigungssignal bereits in dem zeitlich unmittelbar nächsten und nicht erst in dem übernächsten Empfangszeitraum des empfangenden Teilnehmers zuverlässig empfangen werden kann.

Gemäß Anspruch 8 sind die Einschaltzeitpunkte von Teilnehmern benachbarter Kommunikationsebenen hin zu der Kommunikationsebene niedrigerer Ordnung um einen vorbestimmten positiven Zeitversatz verschoben. Dabei kann der vorbestimmte Zeitversatz so gewählt sein, dass eine minimale Anzahl von insbesondere zwei Ankündigungssignalen ausreichend ist, um einem empfangenden Teilnehmer einer benachbarten Kommunikationsebene das Senden eines Nutztelegramms zuverlässig anzukündigen. Bevorzugt kann der vorbestimmte Zeitversatz ferner so groß gewählt sein, dass nicht nur das Anzeigetelegramm, sondern auch noch ein nachfolgendes Nutztelegramm innerhalb dieses Zeitversatzes übertragen werden kann. Ggf. kann innerhalb dieses Zeitversatzes auch noch ein entsprechendes Quittungssignal von dem das Nutztelegramm empfangenden Teilnehmer an den das Nutztelegramm sendenden Teilnehmer übertragen werden. Außerdem sollte bei der Bemessung des Zeitversatzes eine angemessene Reaktionszeit der Teilnehmer für die Weiterleitung der entsprechenden Telegramme hin zu Teilnehmern von weiteren Kommunikationsebenen berücksichtigt werden.

Bei bekannten Systemen wie beispielsweise dem Gefahrenmeldesystem SiRoute der Fa. Siemens addieren sich bei einer mehrstufigen Datenübertragung über mehrere Kommunikationsebenen hinweg die jeweiligen Vorlaufzeiten von sämtlichen an der Datenübertragung beteiligten Teilnehmer. Die einzelnen Vorlaufzeiten liegen dabei in der Größenordnung von 500 ms. Zu jeder Vorlaufzeit addiert sich noch die für den eigentlichen Datenaustausch mittels eines Nutztelegramms benötigte Zeit von etwa 50 ms. Wird von einer Bedieneinrichtung eines Teilnehmers der vierten Kommunikationsebenen aus eine Anfrage an das System gestellt, dann addieren sich diese Zeiten zuzüglich der Reaktionszeit innerhalb der Zentrale auf ca. 5 Sekunden. Dies stellt für viele Anwendungen eine fast schon inakzeptable Wartezeit dar.

Im Vergleich dazu ermöglicht die mit eindeutigen Zeitversätzen gestaffelte Signalweiterleitung des hier beschriebenen Verfahrens eine deutlich schnellere Signalübertragung. Damit wird die Trägheit des gesamten Systems verringert und somit sowohl der Bedienkomfort als auch die gesamte Reaktionszeit bei einem Gefahrenfall deutlich verbessert.

Gemäß Anspruch 9 weist das Verfahren zusätzlich folgenden Schritt auf: Einschalten der Empfänger zu zyklisch vorgegebenen weiteren Einschaltzeitpunkten für jeweils einen bestimmten weiteren Empfangszeitraum, wobei (a) die weiteren Einschaltzeitpunkte für Teilnehmer innerhalb einer Kommunikationsebene zeitlich zumindest annähernd zusammenfallen und (b) die Einschaltzeitpunkte von Teilnehmern benachbarter Kommunikationsebenen hin zu der Kommunikationsebene niedrigerer Ordnung um einen vorbestimmten negativen Zeitversatz verschoben sind.

Eine derartige spiegelverkehrte Staffelung der weiteren Empfangszeiten hat den Vorteil, dass auch der Datentransfer für Ankündigungstelegramme sowie ggf. für Nutztelegramme in Richtung zu Teilnehmern, die höheren Kommunikationsebenen zugeordnet sind, besonders zügig erfolgen kann. Um eine möglichst schnelle Datenübertragung von einem peripheren Teilnehmer in einer Kommunikationsebenen höherer Ordnung hin zu der Zentrale und ebenso eine möglichst schnelle Response-Datenübertragung von der Zentrale zurück zu dem peripheren Teilnehmer zu realisieren, ist die zeitliche Verschiebung zwischen der Serie von Einschaltzeitpunkten und der Serie von weiteren Einschaltzeitpunkten von der Ordnung der Kommunikationsebene abhängig. Bei Teilnehmern einer Kommunikationsebene niedriger Ordnung ist diese Verschiebung bevorzugt kleiner als bei Teilnehmern einer Kommunikationsebene höherer Ordnung.

Es wird darauf hingewiesen, dass diese Betrachtung ohne Einschränkung nur für den Fall gilt, bei dem sowohl die Datenübertragung von dem peripheren Teilnehmer hin zur Zentrale als auch die Response-Datenübertragung von der Zentrale zurück zu dem peripheren Teilnehmer innerhalb der Dauer einer Grundperiode der zyklischen Folge von Einschaltzeitpunkten bzw. der zyklischen Folge von weiteren Einschaltzeitpunkten erfolgt. Sollte diese Bedingung nicht erfüllt sein, beispielsweise weil die Anzahl der Kommunikationsebenen zu groß ist und/oder weil die Grundperiode zu kurz ist, dann ergibt sich eine optimale Datenübertragung sowohl hin zur Zentrale als auch weg von der Zentrale durch eine in Bezug auf benachbarte Kommunikationsebenen zeitliche Verschachtelung der Einschaltzeitpunkte und der weiteren Einschaltzeitpunkte.

Gemäß Anspruch 10 erfolgt das Einschalten der Empfänger zu den zyklisch vorgegebenen weiteren Einschaltzeitpunkten lediglich dann, wenn die betreffenden Teilnehmer zuvor einen Datentransfer hin zu Teilnehmern einer niedrigeren Kommunikationsebene beobachtet haben. Dies hat den Vorteil, dass die Möglichkeit eines schnellen Datentransfers eines Ankündigungstelegramms und/oder eines Nutztelegramms lediglich dann durch das System bereitgestellt wird, wenn mit einer Meldung von der Zentrale bzw. von den Teilnehmern zu rechnen ist, die Kommunikationsebenen niedrigerer Ordnung zugeordnet sind. Da bei Gefahrenmeldesystemen ein Übertragungskanal in diese Richtung hin zu einem peripheren Teilnehmer nur relativ selten bereitgestellt werden muss, lässt sich auf diese Weise der Strombedarf der einzelnen Teilnehmer zusätzlich deutlich senken.

Gemäß Anspruch 11 erfolgt das Senden eines Ankündigungstelegramms durch den sendenden Teilnehmer an den empfangenden Teilnehmer unabhängig von den Einschaltzeitpunkten des empfangenden Teilnehmers unmittelbar nach einem auslösenden Ereignis. Dies hat insbesondere bei Gefahrmeldesystemen den Vorteil, dass im Falle der Aktivierung von zwei unterschiedlichen sendenden Teilnehmern durch ein und dasselbe Ereignis in der Regel die beiden Teilnehmer zu leicht unterschiedlichen Zeitpunkten mit dem Senden des Ankündigungstelegramms beginnen. Dies liegt daran, dass das auslösende Ereignis typischerweise von beiden Teilnehmern zu leicht unterschiedlichen Zeitpunkten detektiert wird. Im Vergleich zu einem fest vorgegebenen zeitlichen Raster von möglichen Zeitpunkten für den Beginn eines Ankündigungstelegramms hat das prompte Senden eines Ankündigungstelegramms den Vorteil, dass ein absolut gleichzeitiges Einschalten von unterschiedlichen sendenden Teilnehmern äußerst unwahrscheinlich ist. Auf diese Weise kann gewährleistet werden, dass Kollisionen in dem Funk-Kommunikationsnetzwerk unwahrscheinlich werden und die bekannten Verfahren zur Kollisionsauflösung selten anspringen müssen.

Gemäß Anspruch 12 werden nur so viele Ankündigungstelegramme gesendet, bis der empfangende Teilnehmer auch tatsächlich zum Empfang bereit ist. Auf diese Weise wird die entsprechende Kanalbelegung sofort beendet, sobald ein gültiges Ankündigungssignal von dem sendenden Teilnehmer zu dem empfangenden Teilnehmer übertragen wurde.

Mit dem unabhängigen Patentanspruch 13 wird ein Kommunikationsgerät für ein Funk-Kommunikationsnetzwerk geschaffen, welches Funk-Kommunikationsnetzwerk eine Zentrale und mehrere Teilnehmer umfasst, die in Bezug auf die Zentrale unterschiedlichen Kommunikationsebenen zugeordnet sind. Das Kommunikationsgerät weist (a) einen Sender, (b) einen Empfänger und (c) eine Datenverarbeitungseinrichtung auf. Die Datenverarbeitungseinrichtung, welche mit dem Sender und mit dem Empfänger gekoppelt ist, ist derart eingerichtet, dass das oben genannte Verfahren durchführbar ist. Das erfindungsgemäße Kommunikationsgerät ist dabei ein Teilnehmer des Funk-Kommunikationsnetzwerkes.

Mit dem unabhängigen Patentanspruch 14 wird ein Funk-Kommunikationsnetzwerk geschaffen, welches (a) eine Zentrale und (b) zumindest zwei der genannten Kommunikationsgeräte aufweist.

Gemäß Anspruch 15 ist das Funk-Kommunikationsnetzwerk als Gefahrenmeldesystem insbesondere zum Überwachen von Gebäuden ausgebildet. Dabei können die einzelnen Teilnehmer Sensoren aufweisen, die beispielsweise einen Brand detektieren oder als Bewegungsmelder einen Einbruchsversuch erkennen. Die Teilnehmer können darüber hinaus auch zentrale Funktionen übernehmen, wobei beispielsweise durch eine entsprechende Bedieneingabe an einer Eingabeeinheit eines Teilnehmers bestimmte Teilnehmer oder sämtliche Teilnehmer des Gefahrmeldesystems in einen geänderten Betriebsmodus überführt werden. Ebenso ist es möglich, dass einzelne Teilnehmer Stellantriebe aufweisen, um Türen zu verschließen, Licht an- oder auszuschalten und/oder um Jalousien in Bewegung zu setzen.

Mit dem unabhängigen Patentanspruch 16 wird ein computerlesbares Speichermedium geschaffen, in welchem ein Programm zum Betreiben eines Funk-Kommunikationsnetzwerkes mit einer Zentrale und mehreren Teilnehmern, die in Bezug auf die Zentrale unterschiedlichen Kommunikationsebenen zugeordnet sind, gespeichert ist. Wenn das Programm von einer Datenverarbeitungseinrichtung ausgeführt wird, wird das oben genannte Verfahren zur Funkübertragung in einem Kommunikationsnetzwerk durchgeführt.

Mit dem unabhängigen Patentanspruch 17 wird ein Programm-Element zum Betreiben eines Funk-Kommunikationsnetzwerkes mit einer Zentrale und mehreren Teilnehmern beschrieben, die in Bezug auf die Zentrale unterschiedlichen Kommunikationsebenen zugeordnet sind. Wenn das Programm-Element von einer Datenverarbeitungseinrichtung ausgeführt wird, wird das oben genannte Verfahren zur Funkübertragung in einem Kommunikationsnetzwerk durchgeführt.

Das Programm-Element kann als computerlesbarer Anweisungscode in jeder geeigneten Programmiersprache wie beispielsweise in JAVA, C++ etc. implementiert sein. Das Programm-Element kann auf einem computerlesbaren Speichermedium (CD-Rom, DVD, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte derart programmieren, dass die gewünschten Funktionen ausgeführt werden. Ferner kann das Programm-Element in einem Netzwerk wie beispielsweise dem Internet bereitgestellt werden, von dem es bei Bedarf von einem Nutzer herunter geladen werden kann.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Weitere Vorteile und Merkmale der vorliegenden Erfindung ergeben sich aus der folgenden beispielhaften Beschreibung derzeit bevorzugter Ausführungsformen. In der Zeichnung zeigen in schematischen Darstellungen

In der Zeichnung zeigen in schematischen Darstellungen
- Figur 1: den Aufbau eines Funk-Gefahrenmeldesystems mit einer Zentrale und zwei Teilnehmern,
- Figur 2: ein Funk-Gefahrenmeldesystem, bei dem eine Vielzahl von Teilnehmern jeweils einer Kommunikationsebene zugeordnet sind,
- Figur 3: ein Präambel-Funksignal zur Synchronisation zwischen einem sendenden Teilnehmer und einem empfangenden Teilnehmer,
- Figur 4: ein Zeitdiagramm eines Funkszenarios, bei dem von einem Teilnehmer der ersten Kommunikationsebene ein Ankündigungstelegramm und ein Nutztelegramm an die Zentrale gesendet wird,
- Figur 5: ein Zeitdiagramm, welches die gestaffelte zeitliche Anordnung der Empfangszeiträume der Teilnehmer von unterschiedlichen Kommunikationsebenen darstellt,
- Figur: 6 ein Zeitdiagramm eines Funkszenarios, bei dem nach einem auslösenden Ereignis eine Nachrichtfortpflanzung bis hin zur Zentrale erfolgt, und
- Figur 7: ein Zeitdiagramm von Empfangszeiträumen von Teilnehmern unterschiedlicher Kommunikationsebenen, welche Empfangszeiträume zeitlich spiegelsymmetrisch gestaffelt sind.

An dieser Stelle bleibt anzumerken, dass sich in der Zeichnung die Bezugszeichen von gleichen oder von einander entsprechenden Komponenten lediglich in ihrer ersten Ziffer unterscheiden.

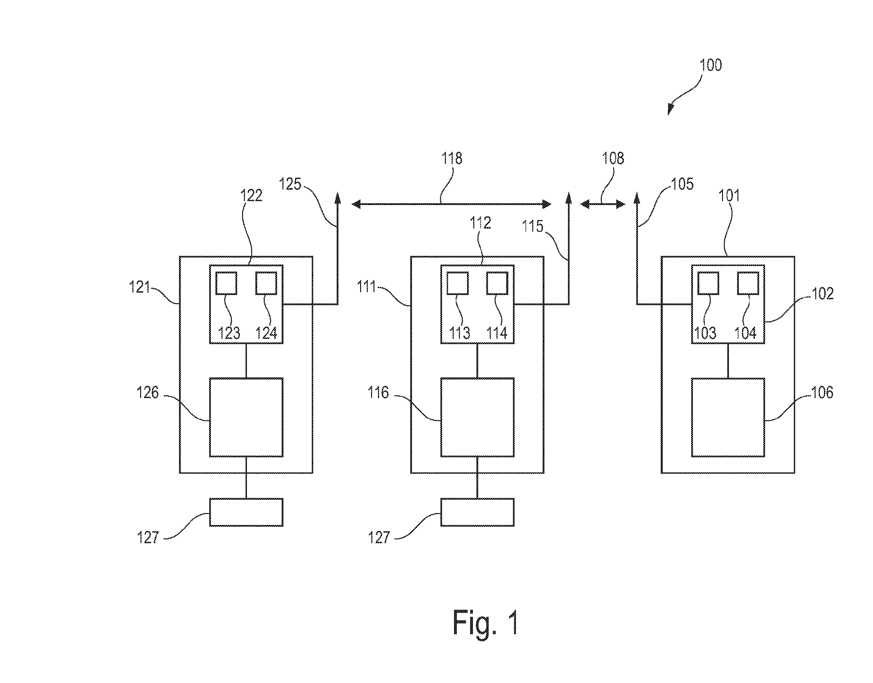

In Figur 1 zeigt ein Funk-Gefahrenmeldesystem 100, welches eine Zentrale 101 sowie einen ersten Teilnehmer 111 und einen zweiten Teilnehmer 121 aufweist. Selbstverständlich kann das Funk-Gefahrenmeldesystem 100 auch noch weitere nicht dargestellte Teilnehmer aufweisen.

Die Zentrale 101 weist ein Funkmodul 102 auf, welches einen Sender 103 und einen Empfänger 104 umfasst. Das Funkmodul 102 ist mit einer Antenne 105 gekoppelt. Ferner weist die Zentrale 101 noch einen Systemcontroller 106 auf.

Der erste Teilnehmer 111 bzw. der zweite Teilnehmer 121 weist ebenfalls ein Funkmodul 112 bzw. 122 auf, welches einen Sender 113 bzw. 123 und einen Empfänger 114 bzw. 124 umfasst. Das Funkmodul 112 bzw. 122 ist mit einer Antenne 115 bzw. 125 gekoppelt. Der erste Teilnehmer 111 bzw. der zweite Teilnehmer 121 weist ferner einen Mikroprozessor 116 bzw. 126 auf, der in bekannter Weise mit einer Detektionseinrichtung 117 bzw. 127 gekoppelt ist.

Die Detektionseinrichtung 117 bzw. 127 ist beispielsweise als Infrarotmelder zur Einbruchserkennung oder als Rauch- oder Wärmesensor zur Branderkennung ausgebildet. Ein Teilnehmer kann jedoch Bedienelemente aufweisen, so dass der betreffende Teilnehmer, welcher mit oder ohne Detektionseinrichtung ausgebildet sein kann, eingegebene Befehle an die Zentrale 101 übermitteln kann. In der Zentrale ist deshalb der Systemcontroller 106 vorgesehen, mit dem eine weitere Bearbeitung einer Gefahrmeldung durchgeführt wird. So kann beispielsweise im Falle eines Brandes die Feuerwehr alarmiert, eventuelle Feuerschutztüren geschlossen und/oder ein Alarmsignal in einem Gebäude ausgelöst werden.

Der erste Teilnehmer 111 kommuniziert über eine Funkübertragungsstrecke 108 mit der Zentrale 101, welche Funkübertragungsstrecke 108 zwischen der Antenne 115 und der Antenne 105 ausgebildet ist. Der zweite Teilnehmer 121 kann aufgrund einer großen räumlichen Distanz nicht direkt mit der Zentrale 101 kommunizieren. Die Kommunikation des zweiten Teilnehmers 121 mit der Zentrale 101 erfolgt mittelbar über den ersten Teilnehmer 111, wobei die Kommunikation zwischen dem zweiten Teilnehmer 121 und dem ersten Teilnehmer 111 über eine Funkübertragungsstrecke 118 erfolgt, die zwischen der Antenne 125 und der Antenne 115 ausgebildet ist.

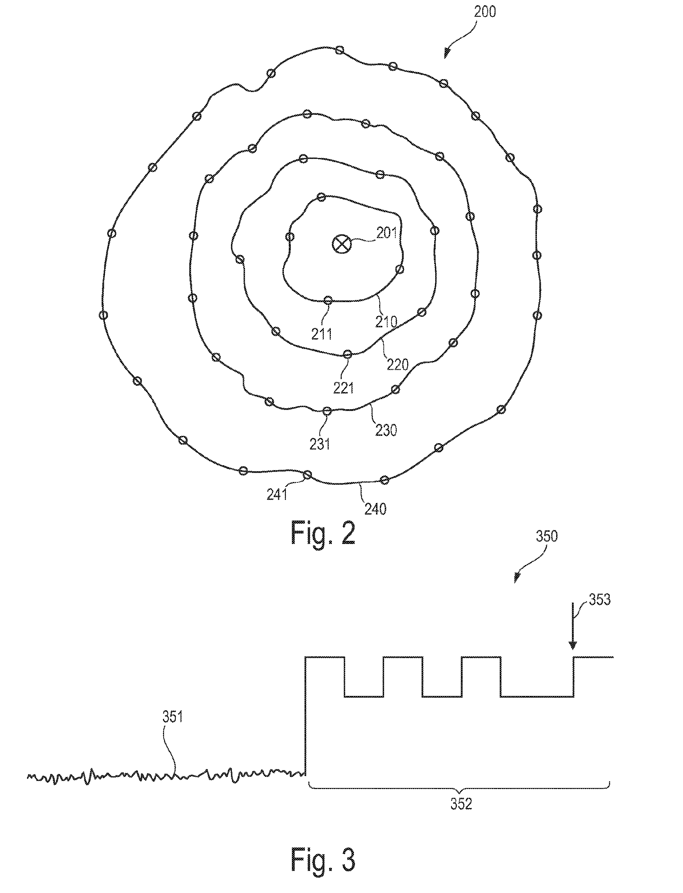

Figur 2 zeigt ein Funk-Gefahrenmeldesystem 200 mit einer Zentrale 201, um welche eine Vielzahl von unterschiedlichen Funk-Teilnehmern jeweils einer Kommunikationsebene zugeordnet sind. Erste Teilnehmer 211 sind in direkter Funkkontakt-Reichweite einer Kommunikationsebene erster Ordnung 210 zugeordnet. Zweite Teilnehmer 221, die nicht direkt mit der Zentrale 201 kommunizieren können, sind einer Kommunikationsebene zweiter Ordnung 220 zugeordnet. Die Kommunikation eines zweiten Teilnehmers 221 mit der Zentrale 201 erfolgt indirekt über einen ersten Teilnehmer 211. In entsprechender Weise sind mehrere dritte Teilnehmer 231 einer Kommunikationsebene dritter Ordnung 230 und mehrere vierte Teilnehmer 241 einer Kommunikationsebene vierter Ordnung 240 zugeordnet.

Um eine reibungslose Kommunikation mit der Zentrale zu gewährleisten, ist nach einer initialisierenden Konfiguration des Funk-Gefahrenmeldesystems 200, welche in bekannter Weise automatisch durchgeführt werden kann, für jeden Teilnehmer einer Kommunikationsebene höherer Ordnung bekannt, über welche Teilnehmer von Kommunikationsebenen niedrigerer Ordnung er mit der Zentrale 201 kommunizieren kann. Die Adressen dieser vermittelnden Teilnehmer in dem Funk-Kommunikationsnetzwerk 200 können in einem Speicher des betreffenden Teilnehmers hinterlegt sein. Dieser Speicherinhalt kann bei einer erneuten Konfiguration, beispielsweise wenn sich die Empfangsverhältnisse der einzelnen Teilnehmer verändert haben, überschrieben werden.

Figur 3 zeigt gemäß einem Ausführungsbeispiel der Erfindung den Signalverlauf 350 einer Präambel. Die Präambel 350 wird von einem sendenden Teilnehmer dazu verwendet, um vor dem Senden eines Informationssignals einen empfangenden Teilnehmer mit seiner eigenen Zeitbasis zu synchronisieren. Unmittelbar nach der durch die Präambel 350 erfolgten Synchronisation kann dann ein in Figur 3 nicht dargestelltes Informationssignal gesendet werden. Mit diesem Informationssignal werden gemäß dem hier beschriebenen Ausführungsbeispiel Informationen über den genauen Zeitpunkt eines nachfolgend geplanten Nutztelegramms an den empfangenden Teilnehmer übermittelt. Nach einem korrekten Empfang des Informationssignals kann sich der Empfänger des empfangenden Teilnehmers vorübergehend abschalten und somit Strom sparen. Die Präambel 350 und das nachfolgende Informationssignal werden zusammen als Ankündigungssignal bezeichnet.

Die Präambel 350 weist eine zeitlich eindeutige Signalfolge 352 aus mehreren Bits auf, welche sich von einem Rauschen 351 abhebt. Die Synchronisation des empfangenden Teilnehmers mit dem sendenden Teilnehmer erfolgt an einem ausgezeichneten Übergang 353 des Signalpegels, welcher Übergang 353 durch den Pegelanstieg nach einem zeitlich verlängerten Nullpegel bestimmt ist. Dieser Übergang bestimmt somit den Synchronisationszeitpunkt zwischen den beiden Funkteilnehmern. Selbstverständlich können auch andere eindeutig identifizierbare Signalfolgen als Präambel verwendet werden.

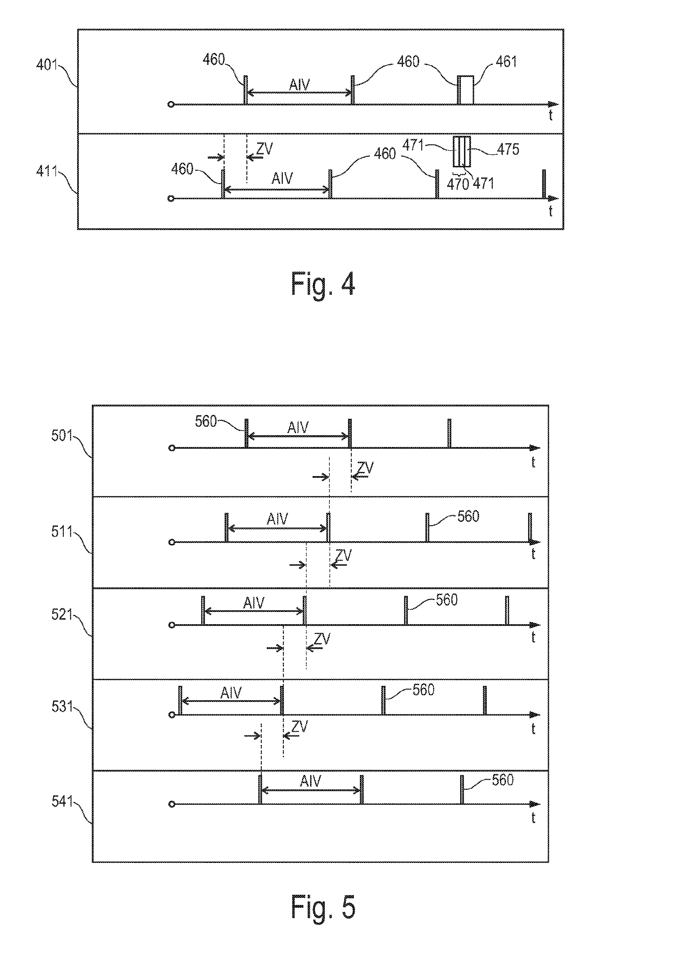

Figur 4 zeigt ein Zeitdiagramm eines Funkszenarios, bei dem von einem Teilnehmer 411 der ersten Kommunikationsebene ein Ankündigungstelegramm 470 und ein Nutztelegramm 475 an die Zentrale 401 gesendet wird. Sowohl die Zentrale 401 als auch der Teilnehmer 411 schalten ihren Empfänger in zyklisch vorgegebenen Empfangszeiträumen 460 ein. Gemäß dem hier beschriebenen Ausführungsbeispiel haben die Empfangszeiträume 460 jeweils eine zeitliche Länge von einigen Millisekunden. Zwischen zwei aufeinander folgenden Empfangszeiträume 460 werden die jeweiligen Empfänger für ein so genanntes Abfrageintervall AIV abgeschaltet, um den Stromverbrauch der einzelnen Teilnehmer entsprechend zu reduzieren.

Wie aus Figur 4 ersichtlich, sind die Zeitraster der Empfangszeiträume 460 von der Zentrale 401 und dem Teilnehmer 411 um einen konstanten Zeitversatz ZV verschoben. Dieser Zeitversatz ZV ist dem Teilnehmer 411 bekannt, so dass er den Sendezeitpunkt eines Ankündigungssignals 471 auf das Zeitraster der Empfangszeiträume 460 der Zentrale 401 abstimmen kann. Gemäß dem hier dargestellten Ausführungsbeispiel beginnt der Sender mit dem Senden eines ersten Ankündigungssignals 471 unmittelbar bevor er einen Empfangszeitraum 460 der Zentrale 401 erwartet. Unmittelbar nach dem ersten Ankündigungssignal 471 wird ein zweites Ankündigungssignal 471, welches dann zuverlässig in den entsprechenden Empfangszeitraum 460 der Zentrale 401 fällt und somit sicher erkannt werden kann.

Wie bereits zuvor beschrieben, weisen die Ankündigungssignale 471 jeweils eine Präambel und ein Informationssignal auf.

Spätestens mit dem zweiten Ankündigungssignal 471 wird der Zentrale 401 mitgeteilt, dass nachfolgend das Nutztelegramm 475 übertragen wird. Gemäß dem hier dargestellten Ausführungsbeispiel wird das Nutztelegramm 475 unmittelbar nach dem Ende des zweiten Ankündigungssignals 471 gesendet. Das Nutztelegramm 475 kann somit durch eine verlängerte Empfangsbereitschaft 461 von der Zentrale 401 empfangen werden.

Die Anzahl der gesendeten Ankündigungssignale 471 hängt dabei von der Ungenauigkeit der Zeitbasen des sendenden Teilnehmers 411 und des empfangenden Teilnehmers ab, welcher hier die Zentrale 401 ist. Ferner hängt die Anzahl der gesendeten Ankündigungssignale 471 und damit die Länge des gesamten Ankündigungstelegramms 470 von der Zeitdifferenz zwischen der letzten Synchronisation zwischen dem sendenden Teilnehmer 411 und dem empfangenden Teilnehmer 401 ab. Die Anzahl der Ankündigungssignale 471 des sendenden Teilnehmers 411 muss demzufolge so groß sein, dass selbst bei einer maximal möglichen Zeitdifferenz zumindest eines der Ankündigungssignale 411 von dem empfangsbereiten empfangenden Teilnehmer 401 korrekt aufgenommen wird.

Wenn die Toleranz der Zeitbasen der beiden Teilnehmer 411 und 401 untereinander ca. 10⁻⁵ ist und die letzte Synchronisation ungefähr 1000 Sekunden zurückliegt, dann muss als Toleranzwert ca. 10 ms angesetzt werden. Bei einer Ankündigungssignal-Dauer von 12 ms, reichen zwei unmittelbar aufeinander folgende Ankündigungssignale 471 aus, um sicher zu stellen, dass ein Ankündigungssignal 471 vollständig empfangen wird. Bei dem bekannten Gefahrenmeldesystem SiRoute der Fa. Siemens werden derzeit 47 Ankündigungssignale gesendet, was zu einer im Vergleich zu dem beschriebene Verfahren deutlich höheren Funkbelastung führt, deren Konsequenz dann wieder Kollisionen zwischen verschiedenen Ankündigungssignalen von unterschiedlichen Teilnehmern sind.

Figur 5 zeigt ein Zeitdiagramm, welches eine gestaffelte zeitliche Anordnung der Empfangszeiträume 560 der Teilnehmer von unterschiedlichen Kommunikationsebenen darstellt. Dargestellt sind die Empfangszeiträume 560 der Zentrale 501, eines Teilnehmers 511 der Kommunikationsebene erster Ordnung, eines Teilnehmers 521 der Kommunikationsebene zweiter Ordnung, eines Teilnehmers 531 der Kommunikationsebene dritter Ordnung und eines Teilnehmers 541 der Kommunikationsebene vierter Ordnung. Die Zeitraster von Teilnehmern benachbarter Kommunikationsebenen sind jeweils um den konstanten Zeitversatz ZV gegeneinander verschoben. Somit weiß bei einer entsprechenden Synchronisation zwischen den verschiedenen Empfangsebenen jeder Teilnehmer, wann die Teilnehmer, die anderen Kommunikationsebenen zugeordnet sind, empfangsbereit sind.

Die Synchronisation zwischen den verschiedenen Kommunikationsebenen erfolgt gemäß dem hier dargestellten Ausführungsbeispiel durch Routinetelegramme der Systemüberwachung und/oder durch Bestätigungssignale von Teilnehmern niedrigerer Kommunikationsebenen, mit denen die entsprechenden Teilnehmer einen korrekten Empfang eines Ankündigungssignals und/oder eines Nutztelegramms quittieren. Der zeitliche Abgleich erfolgt dabei nur zwischen den verschiedenen Kommunikationsebenen. Der zeitliche Abgleich erfolgt nicht zwischen Teilnehmern, die derselben Kommunikationsebene zugeordnet sind.

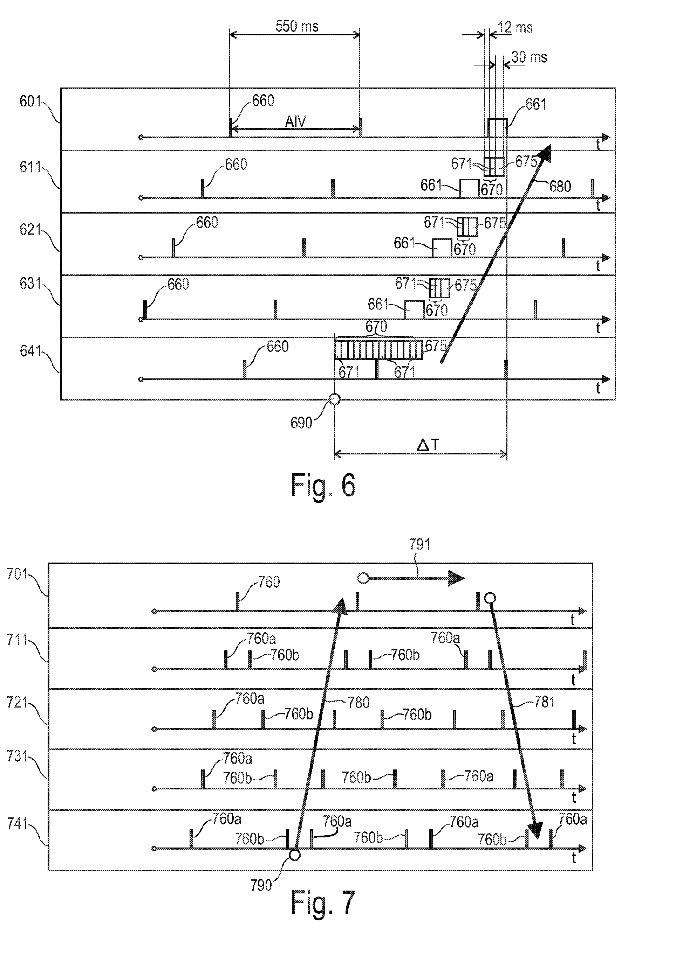

Figur 6 zeigt ein Zeitdiagramm eines Funkszenarios, bei dem nach der Detektion eines auslösenden Ereignisses 690 durch einen Teilnehmer 641 der Kommunikationsebene vierter Ordnung eine Nachrichtfortpflanzung 680 bis hin zur Zentrale 601 erfolgt. Die Nachrichtfortpflanzung 680 erfolgt über einen Teilnehmer 631 der Kommunikationsebene dritter Ordnung, über einen Teilnehmer 621 der Kommunikationsebene zweiter Ordnung und über einen Teilnehmer 611 der Kommunikationsebene erster Ordnung. Die Empfänger sämtlicher Teilnehmer einschließlich der Zentrale 601 sind ebenfalls in Form eines zeitlichen Rasters innerhalb der zyklischen Empfangszeiträume 660 angeschaltet.

Wie aus Figur 6 ersichtlich, beginnt der Teilnehmer 641 unmittelbar nach der Detektion des auslösenden Ereignisses 690 mit dem Senden einen Ankündigungstelegramms 670. Das Ankündigungstelegramm 670 enthält eine Mehrzahl von Ankündigungssignalen 671. Die Ankündigungssignale 671 werden so lange wiederholt gesendet, bis ein Ankündigungssignal 671 zeitlich in die Zeitspanne eines Empfangszeitraums 660 des Teilnehmers 631 fällt und von diesem empfangen wird. Dieses Ankündigungssignal 671 triggert eine Verlängerung der Empfangsbereitschaft 661. Aus Gründen der Übersichtlichkeit ist der am Beginn des Zeitraums 661 stehender zyklischer Empfangszeitraums nicht dargestellt. Innerhalb der Empfangsbereitschaft 661 wird ein Nutztelegramm 675 von dem Teilnehmer 641 an den Teilnehmer 631 gesendet.

Die weitere Signalübertragung an den Teilnehmer 621, an den Telnehmer 611 und an die Zentrale 601 erfolgt in zeitlich gestaffelten Funkübertragungen in gleicher Weise, wie zuvor anhand von Figur 4 beschrieben. Im Vergleich zu einer Nachrichtfortpflanzung 680 bei einer nicht vorhandenen Synchronisation zwischen den verschiedenen Kommunikationsebenen ergibt sich eine deutlich verkürzte Gesamtreaktionszeit ΔT, innerhalb der das auslösende Ereignis der Zentrale 601 mitgeteilt wird.

Figur 7 zeigt ein Zeitdiagramm von Empfangszeiträumen 760 der Zentrale 701 sowie von Empfangszeiträumen 760a, 760b von Teilnehmern 711, 721, 731 und 741, die jeweils unterschiedlichen Kommunikationsebenen zugeordnet sind. Die Empfangszeiträume 760a entsprechen den in Figur 6 dargestellten Empfangszeiträumen 660. Diese ermöglichen, wie zuvor anhand von Figur 7 erläutert, eine zügige Nachrichtfortpflanzung 780 hin zu der Zentrale 701. Um jedoch auch eine zügige Nachrichtfortpflanzung 781 weg von der Zentrale 701 zu ermöglichen, werden die Empfänger der Teilnehmer 711, 721, 731 und 741 zusätzlich zyklisch zu den weiteren Empfangszeiträumen 760b angeschaltet. Wie aus Figur 7 ersichtlich, sind diese weiteren Empfangszeiträume 760b in Bezug zu den Empfangszeiträumen 760 der Zentrale 701 zeitlich spiegelsymmetrisch angeordnet. Anders ausgedrückt, die zeitlichen Raster der Empfangszeiträume 760a sind mit abnehmender Ordnung der betreffenden Kommunikationsebenen um einen positiven Zeitversatz gegeneinander verschoben wohingegen die zeitlichen Raster der weiteren Empfangszeiträume 760b mit abnehmender Ordnung der betreffenden Kommunikationsebenen um einen negativen Zeitversatz gegeneinander verschoben sind. Selbstverständlich weisen sämtliche Empfangszeiträume 760, 760a und 760b die gleiche Periodizität auf.

Die zeitlich spiegelsymmetrische Staffelung der Empfangszeiträume 760a und 760b hat den Vorteil, dass auch die Nachrichtfortpflanzung 781 weg von der Zentrale 701 besonders zügig erfolgen kann. Somit kann nach der Detektion eines auslösenden Ereignisses 790 sowohl eine zügige Nachrichtfortpflanzung 780 hin zu der Zentrale 701 als auch eine zügige Nachrichtfortpflanzung 781 weg von der Zentrale 701 gewährleistet werden. Dabei kann die Zentrale 701 innerhalb einer Verarbeitungszeit 791 einen an die jeweilige Gefahrensituation angepasster Befehl an einen Peripherie-Teilnehmer 741 senden, der infolge der gestaffelten Anordnung der weiteren Empfangszeiträume 760b durch die zügige Nachrichtfortpflanzung 781 schnell bei dem Peripherie-Teilnehmer 741 ankommt. Dabei kann der Peripherie-Teilnehmer 741 und Befehlsempfänger beispielsweise eine Tür schließen oder andere Maßnahmen zur Gefahrenabwehr einleiten.

Die Nachrichtfortpflanzung 780 kann jedoch auch durch eine manuelle Bedieneingabe an einer Eingabeeinheit des Teilnehmers 741 erfolgen, wobei die Nachrichtfortpflanzung 781 die zügige Übertragung eines entsprechenden Quittungssignals ermöglicht. Auf diese Weise werden infolge einer schnellen Systemantwort durch das Quittungssignal die Bedieneingaben deutlich komfortabler. Eine Bedienperson muss nämlich nicht mehr ggf. mehrere Sekunden auf eine entsprechende Antwort der Zentrale 701 warten.

Der Peripherie-Teilnehmer 741 kann dabei der gleiche Teilnehmer sein, der bereits das auslösende Ereignis 790 detektiert hat. Der Peripherie-Teilnehmer 741 kann jedoch auch ein anderer Teilnehmer als der Teilnehmer sein, der zuvor das auslösende Ereignis 790 detektiert hat. Ferner kann der Peripherie-Teilnehmer 741 ggf. auch im Vergleich zu dem Teilnehmer, der zuvor das auslösende Ereignis 790 detektiert hat, einer anderen Kommunikationsebene zugeordnet sein.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Bezugszeichenliste

- 100: Funk-Kommunikationsnetzwerk / Funk-Gefahrmeldesystem
- 101: Zentrale
- 102: Funkmodul
- 103: Sender
- 104: Empfänger
- 105: Antenne
- 106: Systemcontroller
- 108: Funkübertragungsstrecke
- 111: erster Teilnehmer
- 112: Funkmodul
- 113: Sender
- 114: Empfänger
- 115: Antenne
- 116: Mikroprozessor
- 117: Detektionseinrichtung
- 118: Funkübertragungsstrecke
- 121: zweiter Teilnehmer
- 122: Funkmodul
- 123: Sender
- 124: Empfänger
- 125: Antenne
- 126: Mikroprozessor
- 127: Detektionseinrichtung

- 200: Funk-Kommunikationsnetzwerk / Funk-Gefahrmeldesystem
- 201: Zentrale
- 210: Kommunikationsebene erster Ordnung
- 211: erster Teilnehmer
- 220: Kommunikationsebene zweiter Ordnung
- 221: zweiter Teilnehmer
- 230: Kommunikationsebene dritter Ordnung
- 231: dritter Teilnehmer
- 240: Kommunikationsebene vierter Ordnung
- 241: vierter Teilnehmer

- 350: Präambel-Signalverlauf
- 351: Rauschen
- 352: Bitfolge
- 353: Synchronisationszeitpunkt

- 401: Zentrale
- 411: Teilnehmer in der 1. Kommunikationsebene
- 460: Empfangszeitraum
- 461: Empfangsbereitschaft nach empfangenem Ankündigungssignal
- 470: Ankündigungstelegramm
- 471: Ankündigungssignal
- 475: Nutztelegramm
- AIV: Abfrageintervall
- ZV: Zeitversatz

- 501: Zentrale
- 511: Teilnehmer der Kommunikationsebene erster Ordnung
- 521: Teilnehmer der Kommunikationsebene zweiter Ordnung
- 531: Teilnehmer der Kommunikationsebene dritter Ordnung
- 541: Teilnehmer der Kommunikationsebene vierter Ordnung
- 560: Empfangszeitraum
- AIV: Abfrageintervall
- ZV: Zeitversatz

- 601: Zentrale
- 611: Teilnehmer der Kommunikationsebene erster Ordnung
- 621: Teilnehmer der Kommunikationsebene zweiter Ordnung
- 631: Teilnehmer der Kommunikationsebene dritter Ordnung
- 641: Teilnehmer der Kommunikationsebene vierter Ordnung
- 660: Empfangszeitraum
- 661: Empfangsbereitschaft nach empfangenem Ankündigungssignal
- 670: Ankündigungstelegramm
- 671: Ankündigungssignal
- 675: Nutztelegramm
- 680: Nachrichtfortpflanzung hin zur Zentrale
- 690: Detektion eines auslösenden Ereignisses
- AIV: Abfrageintervall
- ΔT: Gesamtreaktionszeit

- 701: Zentrale
- 711: Teilnehmer in der 1. Kommunikationsebene
- 721: Teilnehmer in der 2. Kommunikationsebene
- 731: Teilnehmer in der 3. Kommunikationsebene
- 741: Teilnehmer in der 4. Kommunikationsebene
- 760: Empfangszeitraum
- 760a: Empfangszeitraum
- 760b: weiterer Empfangszeitraum
- 780: Nachrichtfortpflanzung hin zu der Zentrale
- 781: Nachrichtfortpflanzung weg von der Zentrale / Befehl zu Peripherie-Teilnehmer
- 790: Detektion eines auslösenden Ereignisses
- 791: Verarbeitungszeit in der Zentrale

## Patentansprüche

1. Verfahren zur Funkübertragung in einem Kommunikationsnetzwerk (100, 200) mit einer Zentrale (101, 201, 601) und mehreren Teilnehmern (611, 621, 631, 641), die in Bezug auf die Zentrale (101, 201, 601) unterschiedlichen Kommunikationsebenen (210, 220, 230, 240) zugeordnet sind, wobei die Zentrale (101, 201, 601) und die Teilnehmer (611, 621, 631, 641) jeweils einen Sender (103, 113, 123) und einen Empfänger (104, 114, 124) aufweisen, das Verfahren aufweisend folgende Schritte:
• Einschalten der Empfänger (104, 114, 124) zu zyklisch vorgegebenen Einschaltzeitpunkten für jeweils einen bestimmten Empfangszeitraum (660), und
• Senden eines Ankündigungstelegramms (670) durch einen sendenden Teilnehmer (641, 631) an einen empfangenden Teilnehmer (631, 621) während einer Zeitspanne, die mit dem Empfangszeitraum (660) des empfangenden Teilnehmers (631, 621) überlappt,
wobei
- die Einschaltzeitpunkte von Teilnehmern, die unterschiedlichen Kommunikationsebenen zugeordneten sind, miteinander synchronisiert sind,
- das Ankündigungstelegramm (670) zumindest zwei Ankündigungssignale (671) aufweist, und
- die Anzahl der Ankündigungssignale (671) von der Ungenauigkeit der Zeitbasen des sendenden Teilnehmers (641, 631) und des empfangenden Teilnehmers (631, 621) sowie von der Zeitdifferenz zwischen der letzten Synchronisation zwischen dem sendenden Teilnehmer (641, 631) und dem empfangenden Teilnehmer (631, 621) abhängt.

2. Verfahren nach Anspruch 1, zusätzlich aufweisend folgende Schritte:
• Senden eines Nutztelegramms (675) durch den sendenden Teilnehmer (641, 631) an den empfangenden Teilnehmer (631, 621) zu einem Zeitpunkt, der dem empfangenden Teilnehmer (631, 621) mittels des Ankündigungstelegramms (670) mitgeteilt wurde, und
• Empfangen des Nutztelegramms (675) durch den empfangenden Teilnehmer (631, 621).

3. Verfahren nach einem der Ansprüche 1 bis 2, bei dem das Ankündigungstelegramm (670) aufeinander folgende Ankündigungssignale (671) aufweist.

4. Verfahren nach einem der Ansprüche 1 bis 3, bei dem die Ankündigungssignale (671) jeweils eine Präambel (350) und ein Informationssignal aufweisen.

5. Verfahren nach einem der Ansprüche 1 bis 4, bei dem die Teilnehmer innerhalb einer Kommunikationsebene (210, 220, 230, 240) derart miteinander synchronisiert sind, dass die entsprechenden Einschaltzeitpunkte (660) der betreffenden Teilnehmer (611, 621, 631, 641) zeitlich versetzt sind.

6. Verfahren nach einem der Ansprüche 1 bis 4, bei dem die Teilnehmer innerhalb einer Kommunikationsebene (210, 220, 230, 240) derart miteinander synchronisiert sind, dass die entsprechenden Einschaltzeitpunkte (660) der betreffenden Teilnehmer zeitlich zumindest annähernd zusammenfallen.

7. Verfahren nach Anspruch 6, bei dem die Einschaltzeitpunkte (660) von Teilnehmern (641, 631, 621, 611) unterschiedlicher Kommunikationsebenen (210, 220, 230, 240) sukzessive verschoben sind.

8. Verfahren nach Anspruch 7, bei dem die Einschaltzeitpunkte (660) von Teilnehmern (631, 621) benachbarter Kommunikationsebenen (230, 220) hin zu der Kommunikationsebene niedrigerer Ordnung (610) um einen vorbestimmten positiven Zeitversatz (ZV) verschoben sind.

9. Verfahren nach Anspruch 8, zusätzlich aufweisend folgenden Schritt:
• Einschalten der Empfänger (114, 124) zu zyklisch vorgegebenen weiteren Einschaltzeitpunkten für jeweils einen bestimmten weiteren Empfangszeitraum (760b), wobei
- die weiteren Einschaltzeitpunkte für Teilnehmer innerhalb einer Kommunikationsebene (210, 220, 230, 240) zeitlich zumindest annähernd zusammenfallen und
- die Einschaltzeitpunkte von Teilnehmern (731, 721) benachbarter Kommunikationsebenen (230, 220) hin zu der Kommunikationsebene niedrigerer Ordnung (210) um einen vorbestimmten negativen Zeitversatz verschoben sind.

10. Verfahren nach Anspruch 9, bei dem das Einschalten der Empfänger (114, 124) zu den zyklisch vorgegebenen weiteren Einschaltzeitpunkten (760b) lediglich dann erfolgt, wenn die betreffenden Teilnehmer (111, 121) zuvor einen Datentransfer (780) hin zu Teilnehmern (711, 721) einer niedrigeren Kommunikationsebene (210, 220) beobachtet haben.

11. Verfahren nach einem der Ansprüche 1 bis 10, wobei das Senden eines Ankündigungstelegramms (670) durch den sendenden Teilnehmer (641) an den empfangenden Teilnehmer (631) unabhängig von den Einschaltzeitpunkten des empfangenden Teilnehmers (631) unmittelbar nach einem auslösenden Ereignis (690) erfolgt.

12. Verfahren nach Anspruch 11, bei dem nur so viele Ankündigungstelegramme (670) gesendet werden, bis der empfangende Teilnehmer (631) zum Empfang bereit ist.

13. Kommunikationsgerät für ein Funk-Kommunikationsnetzwerk (100, 200) mit einer Zentrale (101, 201, 601) und mehreren Teilnehmern (111, 121, 211, 221, 611, 621, 631, 641), die in Bezug auf die Zentrale (101, 201, 601) unterschiedlichen Kommunikationsebenen (210, 220, 230, 240) zugeordnet sind, das Kommunikationsgerät (111, 121, 211, 221, 611, 621) aufweisend
• einen Sender (113, 123),
• einen Empfänger (114, 124) und
• eine Datenverarbeitungseinrichtung (116, 126),
- welche mit dem Sender (113, 123) und dem Empfänger (114, 124) gekoppelt ist und
- welche derart eingerichtet ist, dass das Verfahren nach einem der Ansprüche 1 bis 12 durchführbar ist.

14. Funk-Kommunikationsnetzwerk aufweisend
• eine Zentrale (101, 201, 601) und
• zumindest zwei Kommunikationsgeräte (111, 121, 211, 221, 611, 621) nach Anspruch 13.

15. Funk-Kommunikationsnetzwerk nach Anspruch 14, welches als Gefahrmeldesystem insbesondere zum Überwachen von Gebäuden ausgebildet ist.

16. Computerlesbares Speichermedium, in dem ein Programm zum Betreiben eines Funk-Kommunikationsnetzwerkes (100, 200) mit einer Zentrale (101, 201, 601) und mehreren Teilnehmern (611, 621, 631, 641), die in Bezug auf die Zentrale (101, 201, 601) unterschiedlichen Kommunikationsebenen (210, 220, 230, 240) zugeordnet sind,
gespeichert ist, das Programm,
wenn es von einer Datenverarbeitungseinrichtung (106, 116, 126) ausgeführt wird, zum Durchführen des Verfahrens nach einem der Ansprüche 1 bis 12 eingerichtet ist.

17. Programm-Element zum Betreiben eines Funk-Kommunikationsnetzwerkes (100, 200) mit einer Zentrale (101, 201, 601) und mehreren Teilnehmern (611, 621, 631, 641), die in Bezug auf die Zentrale (101, 201, 601) unterschiedlichen Kommunikationsebenen (210, 220, 230, 240) zugeordnet sind,
das Programm-Element,
wenn es von einer Datenverarbeitungseinrichtung (106, 116, 126) ausgeführt wird, zum Durchführen des Verfahrens nach einem der Ansprüche 1 bis 12 eingerichtet ist.
